Europäisches Patentamt

European Patent Office

Office européen des brevets

(11) Publication number: **0 156 342 B1**

## EUROPEAN PATENT SPECIFICATION

(45) Date of publication of patent specification: **03.06.92**  (51) Int. Cl.⁵: **G06K 9/60**

(21) Application number: **85103489.2**

(22) Date of filing: **25.03.85**

(54) Three-dimensional vision system.

<table>
<tr><td>(30) Priority: <b>26.03.84 JP 56199/84</b></td><td>(73) Proprietor: <b>HITACHI, LTD.</b><br><b>6, Kanda Surugadai 4-chome</b><br><b>Chiyoda-ku, Tokyo 100(JP)</b></td></tr>
<tr><td>(43) Date of publication of application:<br><b>02.10.85 Bulletin 85/40</b></td><td rowspan="2">(72) Inventor: <b>Hata, Seiji</b><br><b>1-20-10, Jyonan</b><br><b>Fujisawa-shi Kanagawa-ken(JP)</b><br>Inventor: <b>Okada, Takushi</b><br><b>2-605, Gumisawahigashihaitsu 1154,</b><br><b>Gumisawa-cho</b><br><b>Totsuka-ku Yokohama-shi Kanagawa-ken(JP)</b><br>Inventor: <b>Ariga, Makoto</b><br><b>103 Mezontateba 4035, Izumi-cho</b><br><b>Totsuka-ku Yokohama-shi Kanagawa-ken(JP)</b><br>Inventor: <b>Okabe, Takafumi</b><br><b>Keimei-ryo, 850, Maeoka-cho</b><br><b>Totsuka-ku Yokohama-shi Kanagawa-ken(JP)</b></td></tr>
<tr><td>(45) Publication of the grant of the patent:<br><b>03.06.92 Bulletin 92/23</b></td></tr>
<tr><td>(84) Designated Contracting States:<br><b>DE FR GB</b></td></tr>
<tr><td>(56) References cited:<br><b>EP-A- 0 107 820</b><br><b>FR-A- 2 301 880</b><br><b>US-A- 4 128 830</b><br><b>US-A- 4 188 544</b><br><b>US-A- 4 343 553</b></td></tr>
<tr><td></td><td>(74) Representative: <b>Patentanwälte Beetz sen. -<br>Beetz jun. Timpe - Siegfried - Schmitt-<br>Fumian<br>Steinsdorfstrasse 10<br>W-8000 München 22(DE)</b></td></tr>
</table>

EP 0 156 342 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a three-dimensional vision system which recognizes the three-dimensional shape of an object using planar light beams projected onto the object when subjected to operations of assembly etc. in a robot, an automaton etc.

Examples for vision sensors employing planar light beams have been developed by General Motors USA (CONSIGHT, described in Robotics Today, pp. 26-32 (Summer 1979) by M. R. Ward et al.) and by Hitachi Ltd. (a compact robot vision, described in Proc. of 1st Int. Symp. of Robots Res. Bretton Woods, Aug. 28 - Sept. 2, 83 by Nakagawa et al.). If a surface of an object to be seen is liable to irregularly reflect light and if the external light conditions are stable, such a vision sensor based on a light segmentation system can receive a clear image and is capable of producing a three-dimensional image. If, however, the object to be handled has a blackish surface liable to absorb light or if it has a reflectivity close to total reflection, the quantity of light entering the image sensor is comparatively small, and the extraction of a light segmentation line becomes difficult due to the occurrence of a background image which may be brighter than the reflected light. Moreover, fluctuations of the external light leads to instabilities in extracting the desired image.

Further, US-A-4 343 553 discloses a shape detecting apparatus which comprises a slit projecting means for projecting a slit image on a three-dimensional object, a positioning means for positioning said three-dimensional object relative to said slit projecting means, an image pickup means for two-dimensionally scanning the slit image projected by said slit projecting means to pickup the image, a light segment extracting circuit including a center position extracting means for extracting a mean position of two position signals at which a video signal derived by transversely scanning said slit image by said image pickup means corresponds to a first higher reference when a maximum value of said video signal exceeds said first higher reference, a maximum value position extracting means for extracting a position corresponding to the maximum value of said video signal when the maximum value of said video signal is not higher than said first higher reference and exceeds a second lower reference, an erasing means for erasing the position signal of said video signal when the maximum value of said video signal is not higher than said second lower reference and a detecting means for detecting a shape of said three-dimensional object by analyzing the light segment position information derived from said light segment extracting circuit.

Finally, US-A-4 128 830 discloses an apparatus for providing a compensation for dark scan noise level for each of a plurality of individual light sensors arranged in a predetermined relation. That apparatus includes means to produce a separate output signal from each of the individual light sensors in accordance with the level of light received by each of the individual light sensors and to produce separate compensation signals for dark scan noise level from each of the individual light sensors when the individual light sensors are prevented from being subjected to light, storage means for receiving and storing the separate compensation signal from said producing means for each of the light sensors to compensate for the dark scan noise level affecting the accuracy of the separate output signal of the same light sensor from said producing means, means to connect said producing means to said storage means only when the individual light sensors are prevented from being subjected to light, subtracting means to subtract the separate compensation signal from said storage means from the output signal of the same light sensor from said producing means to produce a signal compensated for the dark scan noise level and means to supply all of the separate output signals from said producing means to said subtracting means.

## Summary of the Invention

It is an object of the present invention to provide a three-dimensional vision system which can extract a light segmentation line stably without being affected by the surface condition of a object to be handled and by the fluctuation of external light and which can precisely recognize a three-dimensional shape.

The said object is achieved according to the present invention by a vision system as defined in the appended claims 1. Further advantageous developments of the present invention can be derived from the subclaims.

The basic idea of the present invention lies in produce a difference image between a first image obtained when a planar light beam is switched on and second image obtained when said planar light beam is switched off. Due to the said basic feature the vision system according to the present invention is capable of extracting a light segmentation line stably without being affected through environmental conditions such as a surface condition of an object to be handled or fluctuations of external light and thus can precisely recognize a three-dimensional shape.

EP 0 156 342 B1

Brief Description of the Drawings

Fig. 1      is an arrangement diagram for a vision system according to an embodiment of the present invention;

Fig. 2A and 2B      are a detailed block diagrams for the embodiment shown in Fig. 1;

Fig 3(a) to 3(d)      are diagrams for explaing the basic principle of a light segmentation extraction circuit according to the present invention
and

Fig. 4      is a conceptual diagram showing the three-dimensional positions of three points on a two-dimensional image which is detected by a three-dimensional vision sensor.

Detailed Description of the Preferred Embodiment

Now, the present invention will be described in conjunction with an embodiment shown in the drawings.

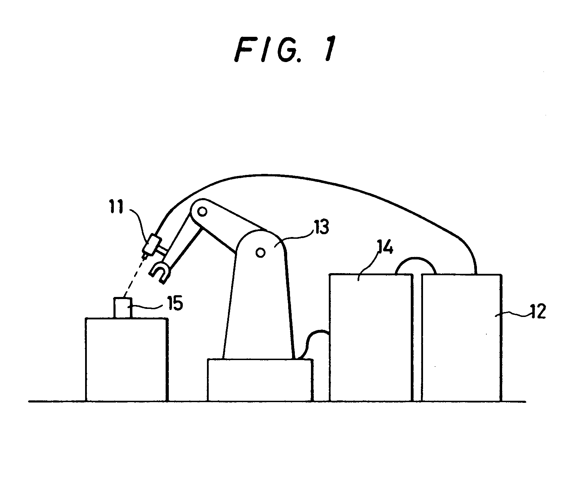

Fig. 1 is a view which shows the schematic arrangement of a three-dimensional vision system according to the present invention. In the arrangement of the system, an image input from a three-dimensional vision sensor (range finder) 11 mounted on the hand of a robot 13 is fed into an image processing apparatus 12, in which the position and attitude of an object to-be-handled 15 are calculated by image processing. The results are transferred to a robot control device 14, and the robot 13 performs, e. g., the operation of gripping the object under the control of the control device.

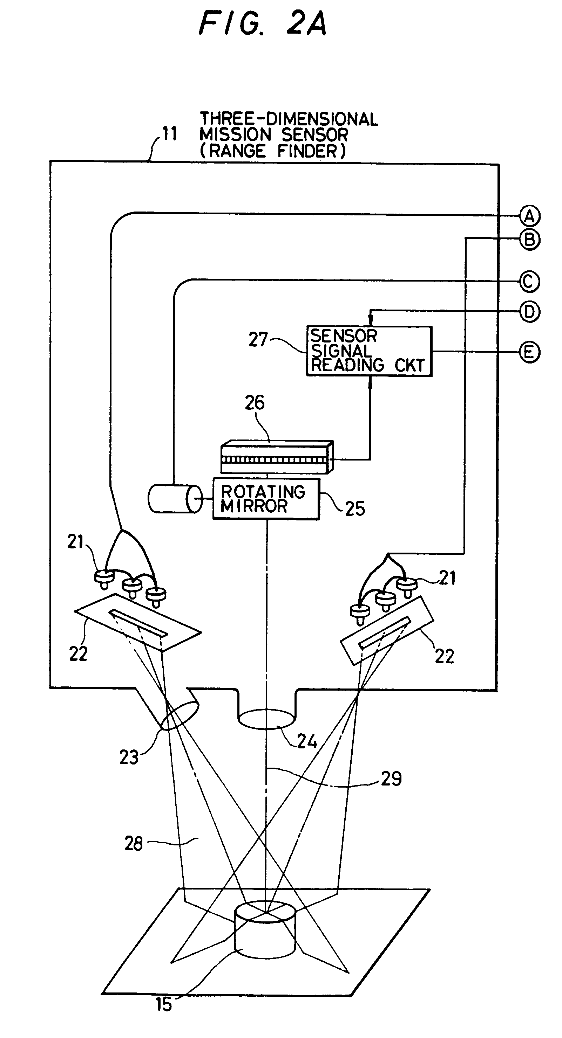

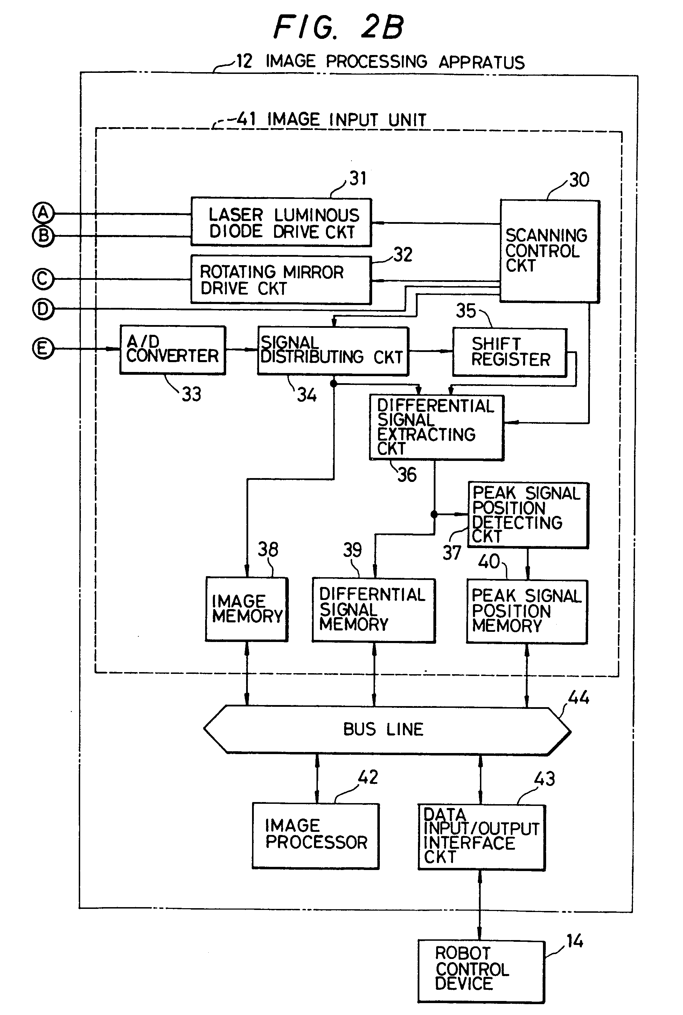

Fig. 2 is a detailed block diagram corresponding to Fig. 1. The three-dimensional vision sensor 11 comprises a projector portion for slit-like or planar light beams 28, which is composed of laser luminous diodes 21, slit-like light patterns 22, and projective lenses 23; and an image detector portion in which a linear image sensor 26 is combined with a rotating mirror 25, an imaging lens 24, and a sensor signal reading circuit 27 for the image sensor 26. Such arrangement affords a three-dimensional image sensor which can receive a slit image when the luminous diodes 21 are lit up and a background image when they are put out.

The internal structure of the image processing apparatus 12 is such that an image input portion 41 which is composed of various circuits 30 - 40 to be described later, an image processor 42 which is constructed of a microcomputer by way of example, and a data input/output interface circuit 43 which serves to communicate with the robot control device 14 are connected by a bus line 44. Here, the image input portion 41 is generally controlled by the scanning control circuit 30 thereof.

The scanning of one line of the image is performed as stated below.

First, the scanning control circuit 30 supplies the rotating mirror control circuit 32 with a positioning signal, by which the rotating mirror 25 is positioned. Thereafter, the laser luminous diode driving circuit 31 is turned "on" (brought into a closed state) to light up the luminous diodes 21. The slit image is applied from the linear image sensor 26 by the sensor signal reading circuit 27, and it is digitized by the A/D converter 33. While the slit image is input, the signal distribution circuit 34 is sending a video signal to the shift register 35. This shift register 35 can store data of the same number of pixels as that of the linear image sensor 26, and can hold the data until the next scanning cycle.

When the slit image has been input by one scanning line, the scanning control circuit 30 puts out the luminous diodes 21 and starts the sensor signal reading circuit 27 again so as to receive the background image. While the background image is input, the signal distribution circuit 34 sends a video signal to the differential signal extracting circuit 36 in accordance with a signal from the scanning control circuit 30. The differential signal extracting circuit 36 is simultaneously supplied with the slit-like light segmentation image data from the shift register 35. It finds the differences of the background image signals from the slit image signals for the same pixels, and stores the results into the differential signal memory 39. At the same time, the position $P_{max}$ of the maximum signal level within the scanning operation is detected by the peak signal position detecting circuit 37 (which is concretely disclosed in U. S. Patent No. 4343553), and it is recorded in the peak signal position memory 40 after the end of the scanning operation.

Further, the differential signals $f_i$ in the vicinity of the position of the maximum signal level [the range of $(P_{max} - n) - (P_{max} + n)$] are read out from the differential signal memory 39, and the operation of

3

$$P_{max}' = \frac{\sum\limits_{i=P_{max}-n}^{i=P_{max}+n} P_i \, f_i}{\sum\limits_{i=P_{max}-n}^{i=P_{max}+n} f_i}$$

is executed. Then, the position $P_{max}'$ of the maximum signal level can be precisely obtained. This position $P_{max}'$ of the maximum signal level is stored in the peak signal position memory 40.

When the image input operation corresponding to one line has ended in the above way, the scanning control circuit 30 positions the rotating mirror 25 to the next scanning line so as to repeat the image input operation of the next line.

When one image frame has been input in the above-stated manner, image inputing ends.

When the processing of one image frame has thus ended, a gradational image free from the slit-like light is stored in the image memory 38, and the positions of the brightest points found on the scanning lines struck by the slit-like light are stored in the peak signal position memory 40.

When the contents of the peak signal position memory 40 are utilized, a distance from the three-dimensional vision sensor 11 to the peak position of the slit-like light can be detected on the basis of the principle of a light segmentation type range finder which is described in, for example, U. S. Patent Application No. 482730 (EP Application No. 83103402.0), U. S. Patent Application No. 537095 (EP Application No. 83109972.6), or Nakagawa et al, Structured light method for inspection of solder joints and assembly robot vision system: Proceeding of 1st International Symposium of Robotics Research Bretton Woods, NH, U. S. A., Aug. 28 - Sept. 2, 1983. When the detecting operations are performed as to the right and left slit-like light beams, the spatial position of the surface of the object 15 struck by the slit-like light beams can be determined.

Here, as disclosed in U. S. Patent Application No. 582555 (corresponding to Japanese Patent Application Laying-open Nos. 59-154574 and 59-154578), two-dimensional image processing is performed on the gradational image memory 38 to extract the contour shape of the two-dimensional surface of the object 15, and the extracted contour shape of the two-dimensional surface is coordinate-transformed on the basis of the spatial position data of the three-dimensional surface extracted by utilizing the slit-like light as described before, whereby a three-dimensional surface shape can be obtained.

More specifically, assuming that the positions $(i_1, j_1)$, $(i_2, j_2)$ and $(i_3, j_3)$ of respective points P1, P2 and P3 on an image screen and the corresponding coordinates $(x_1, y_1, z_1)$, $(x_2, y_2, z_2)$ and $(x_3, y_3, z_3)$ viewed from the three-dimensional vision sensor 11 have been known from the slit-like light segmentation, the coordinates $(x, y, z)$ of a contour point P $(i, j)$ are given by the following equations:

$x = x_1 + \{(i - i_1) a_i + (j - j_1) a_j\} z/z_1$     (1)

$y = y_1 + \{(i - i_1) b_i + (j - j_1) b_j\} z/z_1$     (2)

$z = z_1 + \{(i - i_1) c_i + (j - j_1) c_j\} z/z_1$     (3)

Here,

$$a_i = \frac{(x_2 - x_1)(j_3 - j_1)z_1/z_2 - (x_3 - x_1)(j_2 - j_1)z_1/z_3}{(i_2 - i_1)(j_3 - j_1) - (i_3 - i_1)(j_2 - j_1)}$$

$$\ldots(4)$$

$$a_j = \frac{(x_2 - x_1)(i_3 - i_1)z_1/z_2 - (x_3 - x_1)(i_3 - i_1)z_1/z_3}{(j_2 - j_1)(j_3 - i_1) - (j_3 - j_1)(i_3 - i_1)}$$

$$\ldots(5)$$

$b_i$, $b_j$ and $c_i$, $c_j$ are respectively obtained by replacing $\underline{x}$ in Eqs. (4) and (5) with $\underline{y}$ and $\underline{z}$.

In the above way, the three-dimensional coordinates of the contour line can be found.

Thus, the center and attitude of the surface can be found by utilizing diagrammatical primary and secondary moments, and the position and attitude of the object can be determined.

When the data are sent to the robot control device 14 through the input/output interface circuit 43 and then given to the robot 13 as position data, the robot 13 can perform an operation such as gripping for the object 15.

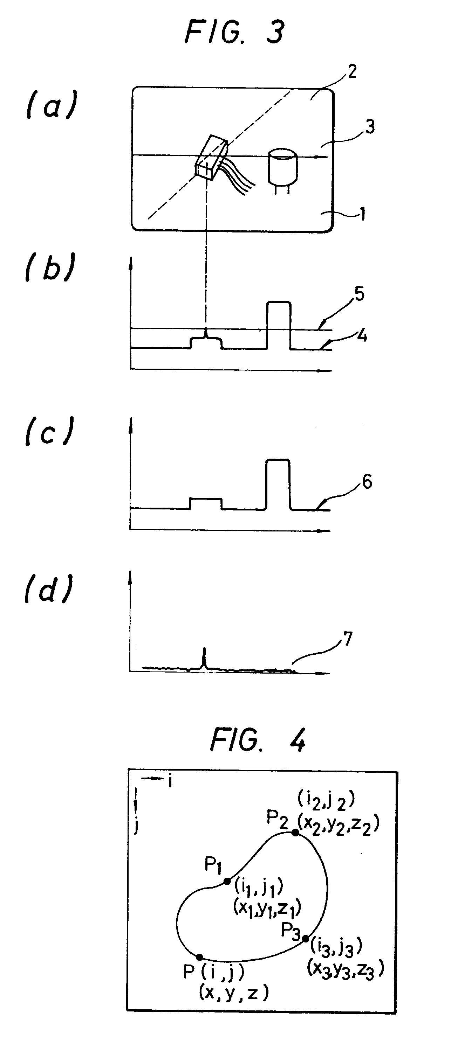

Referring now to Figs. 3(a) - 3(d), the basic principle of the slit-like light segmentation extraction according to the present invention will be described. In an image in Fig. 3(a), the sensor output of one scanning line 3 is schematically graphed as shown in Fig. 3(b). On the other hand, the sensor output of the scanning line produced without projecting slit-like light is as shown in Fig. 3(c). As illustrated in Fig. 3(d), when the difference is obtained between the two image outputs, a background image part almost consists of only noise components, and only a signal component based on the slit-like light segmentation can be clearly taken out.

Although, in the above embodiment, the shift register 35 has a storage capacity corresponding to one raster, it may well be constructed so as to store signals of one image frame and to be fed with the signals of one image frame by revolving the rotating mirror 25 with the luminous diodes 21 put out. In this case, the signal distribution circuit 34 is changed-over, and the luminous diodes 21 are lit up, whereupon the slit-like light segmentation image corresponding to one image frame is input. Then, the background image read out from the shift register 35 is subtracted from the input light segmentation image by the differential signal extracting circuit 36. Thus, the differential signals can be extracted.

As described above in detail, in an image input apparatus which applies the slit-like light segmentation system, components possessed by a background image can be removed from an image of slit-like light segmentation, so that segmentation extraction without the influence of the background image can be performed. In addition, even when the brightness of external light has fluctuated, the fluctuant component can be eliminated, so that the threshold value of the slit-like light segmentation extraction, etc. need not be changed, and stable extraction is possible. Accordingly, remarkable effects are attained for enhancing the precision, efficiency and stability of the image recognition processing of a vision sensor in a robot or a automaton.

**Claims**

1. A three-dimensional vision system, comprising
   - a vision sensor (11) including means (21, 22) for projecting planar light beams (28) onto an object (15) to be handled and means (25, 26) for extracting two-dimensional images of said object both when said planar light beams are switched on and when they are off,
   - an image input portion (41) including control means (30) for timely controlling the switching on and off of said planar light beams (28) and the sequential extraction of said two-dimensional images and means (34 - 36) for processing image signals representing said two-dimensional images when said planar light beams are switched on and when they are off in order to obtain a difference image
   and
   - an image processor (42) for recognizing the three-dimensional shape of said object (15) through calculations performed on the basis of positions corresponding to the maximum intensity values in said difference image.

**2.** A vision system according to claim 1, wherein
said image input portion (41) comprises an image memory (38) for storing said two-dimensional image obtained without projecting said planar light beams (28) onto said object (15).

**3.** A vision system according to claim 1, wherein
said image input portion (41) comprises peak position detection means (37, 40) for analysing difference signals corresponding to a line of data in said difference image and for calculating the position at which the intensity values in said line peak.

**Revendications**

**1.** Système de vision tridimensionnelle comprenant
   - un capteur de vision (11) comprenant des moyens (21,22) pour projeter des faisceaux de lumière plans (28) sur un objet (15) devant être traité, et des moyens (25,26) pour extraire des images bidimensionnelles dudit objet à la fois lorsque lesdits faisceaux de lumière plans sont allumés et lorsqu'ils sont éteints,
   - une partie (41) d'entrée d'images comprenant des moyens de commande (30) pour commander dans le temps l'allumage et l'extinction desdits faisceaux de lumière plans (28) et l'extraction séquentielle desdites images bidimensionnelles, et des moyens (34-36) pour traiter des signaux d'image représentant lesdites images bidimensionnelles lorsque lesdits faisceaux de lumière plans sont allumés et lorsqu'ils sont éteints, pour obtenir une image de différence, et
   - un processeur d'images (42) pour identifier la forme tridimensionnelle dudit objet (15) au moyen de calculs exécutés sur la base de positions correspondant aux valeurs d'intensité maximale dans ladite image de différence.

**2.** Système de vision selon la revendication 1, dans lequel ladite partie (41) d'entrée d'images comprend une mémoire d'images (38) pour mémoriser ladite image bidimensionnelle obtenue sans projection desdits faisceaux de lumière plans (28) sur ledit objet (15).

**3.** Système de vision selon la revendication 1, dans lequel
ladite partie (41) d'entrée d'images comprend des moyens (37,40) de détection de positions de maxima pour analyser des signaux de différence correspondant à une ligne de données dans ladite image de différence et pour calculer la position dans laquelle les valeurs d'intensité dans ladite ligne sont maximales.

**Patentansprüche**

**1.** Ein dreidimensionales Beobachtungssystem, mit
   - einem Beobachtungssensor (11), der versehen ist mit Einrichtungen (21, 22) zum Projizieren planarer Lichtstrahlen (28) auf einen zu bearbeitenden Gegenstand (15) und mit Einrichtungen (25, 26) zum Entnehmen zweidimensionaler Bilder des Gegenstands sowohl dann, wenn die planaren Lichtstrahlen eingeschaltet sind, als auch dann, wenn sie ausgeschaltet sind,
   - einem Bildeingabeabschnitt (41), der versehen ist mit einer Steuereinrichtung (30) für die zeitliche Steuerung des Einschaltens und Ausschaltens der planaren Lichtstrahlen (28) und des aufeinanderfolgenden Entnehmens der zweidimensionalen Bilder und mit Einrichtungen (34 - 36) für die Verarbeitung von die zweidimensionalen Bilder darstellenden Bildsignalen, wenn die planaren Lichtstrahlen ein- und ausgeschaltet sind, um ein Differenzbild zu erhalten, und
   - einem Bildprozessor (42) für die Erkennung der dreidimensionalen Form des Gegenstandes (15) mittels Berechnungen, die auf der Grundlage der den maximalen Intensitätswerten im Differenzbild entsprechenden Positionen ausgeführt werden.

**2.** Ein Beobachtungssystem gemäß Anspruch 1, in dem der Bildeingabeabschnitt (41) einen Bildspeicher (38) aufweist für die Speicherung der zweidimensionalen Bilder, die ohne Projektion der planaren Lichtstrahlen (28) auf den Gegenstand (15) erhalten werden.

**3.** Ein Beobachtungssystem gemäß Anspruch 1, in dem der Bildeingabeabschnitt (41) eine Spitzenposition-Erfassungseinrichtung (37, 40) aufweist, um die Differenzsignale, die einer Zeile von Daten im Differenzbild entsprechen, zu analysieren und um die Position, an der die Intensitätswerte in dieser Zeile maximal sind, zu berechnen.

# FIG. 1

# FIG. 2A

THREE-DIMENSIONAL
MISSION SENSOR
(RANGE FINDER)

11

Ⓐ
Ⓑ
Ⓒ
Ⓓ
Ⓔ

27 — SENSOR
SIGNAL
READING CKT

26

25 — ROTATING MIRROR

21

21

22

22

23

24

29

28

15

# FIG. 2B

12 IMAGE PROCESSING APPRATUS

41 IMAGE INPUT UNIT

A
B → LASER LUMINOUS DIODE DRIVE CKT 31

30 SCANNING CONTROL CKT

C → ROTATING MIRROR DRIVE CKT 32

D

E → A/D CONVERTER 33 → SIGNAL DISTRIBUTING CKT 34 → SHIFT REGISTER 35

DIFFERENTIAL SIGNAL EXTRACTING CKT 36

PEAK SIGNAL POSITION DETECTING CKT 37

IMAGE MEMORY 38

DIFFERNTIAL SIGNAL MEMORY 39

PEAK SIGNAL POSITION MEMORY 40

BUS LINE 44

IMAGE PROCESSOR 42

DATA INPUT/OUTPUT INTERFACE CKT 43

ROBOT CONTROL DEVICE 14

## FIG. 3

(a)

(b)

(c)

(d)

## FIG. 4